# EUROPEAN PATENT APPLICATION

(11) **EP 3 026 843 A1**
(43) Date of publication of application: **01.06.2016**
(21) Application number: 14829367.3
(22) Date of filing: 01.04.2014
(51) Int. Cl.: H04L 12/16, H04L 29/06

(54) **CODE-BASED DEVICE ACCESS METHOD AND USER DEVICE FOR CODE-BASED DEVICE ACCESS**

(30) Priority: 25.07.2013 KR 20130088107
(71) Applicant: J2N CO., LTD., Gangnam-gu Seoul 06253 (KR)
(72) Inventor: KIM, Gun Su, Suwon-si Gyeonggi-do 440-310 (KR)
(74) Representative: Manitz, Finsterwald & Partner GbR
(86) International application number: PCT/KR2014/002755
(87) International publication number: WO 2015/012471

(57) **Abstract**

Disclosed are a code-based device access method and a user device for a code-based device access. A PN code is generated by combining a general subscription phone number and/or a particular number based on a conventional phone number system with a special number existing in a dial pad. An exemplary system for the code-based device access method and the user device for the code-based device access may include a PN code server including a communication server, a registration server or a notification server, a network, a mobile device, and a site server. The mobile device may include an application which provides a PN code service, and the application may include a module which can communicate with the PN code server, another mobile device and/or the site server through the network.

## Description

### BACKGROUND

Unless otherwise indicated herein, the materials described in this section are not prior art to the claims in this application and are not admitted to be prior art by inclusion in this section.

In these days, with the prevalence of smart devices, users having various demands have used the Internet by accessing the Internet in various manners with the smart devices. In the case of accessing the Internet using a domain address, a user needs to directly input a complicated and long address into an Internet address display window in order to access an Internet site. Therefore, in the case of using a smart device, input errors occur frequently due to the complicated URL address and the possibility of accessing an unwanted site is increased. As a page access route in a site desired to be accessed is further subdivided, an address becomes more complicated. Thus, it becomes more difficult for the user to access a wanted page.

Recently, in order to overcome such a problem, a method of using a QR code has been used as an alternative Internet access method in a smart device. However, users need to be well-informed of how to use a QR code. Therefore, it is not easy for a user unfamiliar with smart devices to use this method. Further, since the method of using a QR code uses a camera, if a recognition rate of the camera is decreased, the efficiency of the method is decreased sharply.

Accordingly, there has been tried to find a technical method and device that enables a user to access a site and a mobile device of another user through the Internet by inputting a general phone number into a dial pad which may be typically provided in a mobile device or externally connected to the mobile device.

### SUMMARY

The present disclosure provides a code-based device access method and a user device for a code-based device access. A PN code can be input by using a dial pad which may be typically provided in a mobile device or externally connected to the mobile device and may be implemented mechanically or electronically on a display screen. The PN code is generated by combining a general subscription phone number and/or a particular number on the basis of a conventional phone number system with a special number (e.g., * or #) existing in the dial pad. In some exemplary embodiments, an individual service number which may follow after the special number (e.g., * or #) may be added to the combination. Further, the PN code may include multiple record values such as a P2P type, a service number, information of a mobile device operating system, and the like.

In an exemplary embodiment, an exemplary system for the code-based device access method and the user device for the code-based device access may include a PN code server including a name server, a network, a mobile device, and a site server. The mobile device may include an application which provides a PN code service, and the application may include a communication module which can communicate with the PN code server, another mobile device and/or the site server through the network. In some exemplary embodiments, the server of the system may further include a registration server and a notification server and the application may further include a registration module and a management module.

The above-described summary is for illustration purposes only and does not intend to limit in any ways. In addition to the illustrative embodiments, examples, and features described above, additional embodiments, examples, and features will become apparent by referring to the following detailed description and the drawings.

### BRIEF DESCRIPTION OF THE FIGURES

The foregoing features and other features of the present disclosure will be sufficiently apparent from the following descriptions and the appended claims with reference to the accompanying drawings. These drawings merely illustrate several exemplary embodiments in accordance with the present disclosure. Therefore, they should not be understood as limiting the present disclosure. The present disclosure will be described in more detail with reference to the accompanying drawings.
FIG. 1 illustrates an exemplary PN code of a user and an exemplary record included in the PN code;
FIG. 2 illustrates an exemplary PN code of another user and an exemplary record included in the PN code;
FIG. 3 illustrates an exemplary PN code system including a PN code server, a network, a mobile device, and another mobile device and site server wanted to be communicated by the mobile device;
FIG. 4 is a block diagram illustrating an exemplary PN code server;
FIG. 5 is a block diagram illustrating an exemplary mobile device;
FIG. 6 is a block diagram illustrating modules of an application included in an exemplary mobile device;
FIG. 7 is an exemplary flowchart illustrating a process of an exemplary communication module in an application of a mobile device;
FIG. 8 is an exemplary flowchart illustrating another process of an exemplary communication module in an application of a mobile device; and
FIG. 9 is an exemplary flowchart illustrating a process of an exemplary communication module in an application of a target device, and FIG. 1 to FIG. 9 are arranged according to at least some exemplary embodiments of the present disclosure.

### DETAILED DESCRIPTION

In the following detailed description, reference is made to the accompanying drawings, which form a part of the present disclosure. In the drawings, similar symbols typically identify similar components, unless context dictates otherwise. The exemplary embodiments described in the detailed description, drawings, and claims are not meant to be limiting. Other exemplary embodiments may be utilized, and other changes may be made, without departing from the spirit or scope of the subject matter presented herein. It will be readily understood that the aspects of the present disclosure, as generally described herein and illustrated in the drawings, can be arranged, substituted, combined, and designed in a wide variety of different configurations all of which are explicitly contemplated herein and constitute a part of the present disclosure.

The present disclosure relates to a code-based device access method using a mobile device of a user, and a user device for a code-based device access. A PN code can be input by using a dial pad which may be typically provided in the mobile device or externally connected to the mobile device and may be implemented mechanically or electronically on a display screen. By inputting a PN code of a mobile device of another PN code user or a site server wanted to be communication (i.e., a target device), the user can communicate with the target device through the Internet. The PN code (e.g., particular number + * or #, or subscriber's individual phone number + * or #) is generated by combining a general subscription phone number or a particular number on the basis of a conventional phone number system with a special number (e.g., * or #) existing in the dial pad. If a particular area or country is not limited, one or more of a country code, an area code or network identification code, or a prefix number may be further added and combined prior to the subscriber's individual phone number (for example, country code+ area code or network identification code + prefix number + subscriber's individual phone number + * or #). In some exemplary embodiments, an individual service number which may follow after the special number (e.g., * or #) may be added to the combination (for example, special number + * or # + individual service number, or subscriber's individual phone number + * or # + individual service number). If a new user is registered at a PN code system, in principle, a general phone number being already used is priorly assigned as a phone number to be combined into a PN code. Otherwise, a particular number may be separately assigned.

The PN code (e.g., phone number + * or #) may include multiple record values such as a P2P type, a service number, information of a mobile device operating system, and the like. Such record types may be expressed in Plain Text, XML, JSON, or Binary. Examples thereof are as shown in the following Table.

**[Table 1]**

| Phone number + * or # | Record type | Record value |
|---|---|---|
| | OS | Information of device operating system |
| | Name | User name |
| | Alias | User alias |
| | Updated | Update time |
| | Expired | Expire time |
| | Last accessed | Last access time |
| | Ns | Name server access information, |
| | p2p | Mobile device user's access information |
| | Service number | http |
| | | Mail |
| | | App |
| | | Media |

The record type OS includes information of a device operating system. The record types Name and Alias include a user name and a user alias, respectively. The record types Updated, Expired, and Last accessed include a record update time, a record expire time, and a last record access time, respectively, and may be used for cache management if a cache is managed by the mobile device and the name server. The record type Ns includes PN code name server access information, and the record type p2p includes a peer-to-peer IP address and port information. The record type Service number may constitute a PN code by following after the PN code (e.g. phone number + * or #) as described above. The present disclosure is not limited to the types defined above, and various record types may be added, if necessary, in some exemplary embodiments.

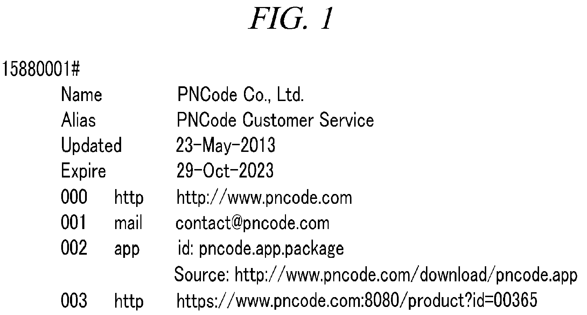

FIG. 1 illustrates an exemplary PN code of a user and an exemplary record included in the PN code. The exemplary user may be illustrated as using a phone number 1588-0001. The PN code of the user may include multiple record types which can be used for information interchange between a server and the user and cache management in a PN code system, and a record type service number which is constituted with numbers only and can be input as an element of the PN code by the user.

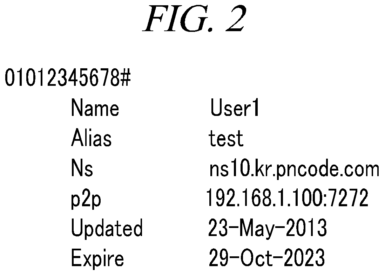

FIG. 2 illustrates an exemplary PN code of another user and an exemplary record included in the PN code. The exemplary user may use a phone number 010-1234-5678. The PN code of the user may include multiple record types which can be used for information interchange between a server and the user and cache management in a PN code system, and a record type p2p. Details of FIG. 1 and FIG. 2 will be described later.

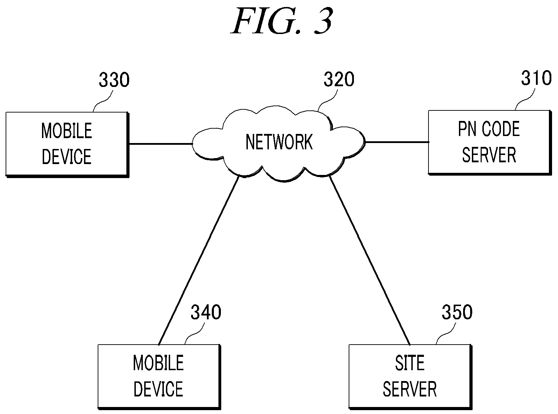

FIG. 3 illustrates an exemplary PN code system 300 including a PN code server 310, a network 320, a mobile device 330, and another mobile device 340 and site server 350 wanted to be communicated by the mobile device 330. The PN code system 300 may further include multiple mobile devices or site servers in addition to the illustrated components.

PN code server 310 may be configured to communicate with mobile devices 330 and 340 and site server 350 in the PN code system through network 320. PN code server 310 may return a result of a query transmitted from mobile device 330. In some exemplary embodiments, a new user may be registered at the PN code server, and if a PN code record of the existing user is modified, such information may be updated by correction and/or deletion. Further, if a new event such an update of the PN code system occurs, such an event may be transmitted to mobile devices 330 and 340. PN code server 310 may further include a database (not illustrated) configured to store PN code records therein.

PN code server 310 may include multiple servers (e.g., a name server, a registration server, or a notification server) which can perform at least one of the above-described functions and/or operations, but may not be limited thereto. PN code server 310 may be divided up into additional servers, or combined into fewer servers.

Network 320 may be configured to enable mobile devices 330 and 340, PN code server 310, or site server 350 in the PN code system to communicate through network 320. Network 320 may be any one of a local area network, a Wi-Fi network, a WiGig network, a radio frequency cellular network, a BlueTooth communication network, and a USB interfaced communication network.

Mobile device 330 may include an application configured to make a query using a PN code to PN code server 310 through network 320 and receive a PN code record value as a result of the query. The application may be configured to communicate with mobile device 340 or site server 350 through network 320 by using the returned PN code record value. Further, the application may be configured to transfer a PN code record modified by the user to PN code server 310 through network 320. Furthermore, the application may receive an event from PN code server 310 and perform an operation corresponding thereto.

The mobile devices with the reference numerals 330 and 340 may be any one of small-form factor portable (or mobile) electronic devices such as a cell phone, a personal data assistant (PDA), a personal media player device, a wireless web-watch device, a personal headset device, an application specific device, or a hybrid device that include any of the above functions.

Site server 350 may be a server hosting a site wanted to be accessed by the user of mobile device 330. Site server 350 may be configured to communicate with mobile device 330 and transmit a content requested from mobile device 330 through network 320.

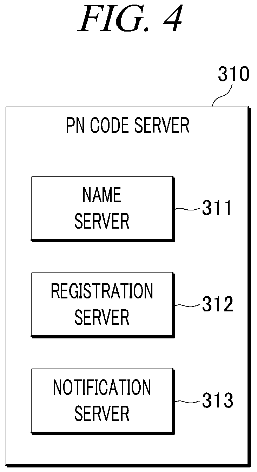

FIG. 4 illustrates exemplary PN code server 310. Exemplary PN code server 310 may include a name server 311, a registration server 312, and a notification server 313. Referring to FIG. 3, name server 311 may be configured to return a result of a query transmitted from mobile device 330. If the user of mobile device 330 inputs a PN code of a target device into a dial pad in order to access mobile deice 340, or site server 350 which hosts a site, name server 311 may receive a query about the PN code input from mobile device 330. Name server 311 may be configured to search the queried PN code and return a corresponding record of the PN code to mobile device 330.

In an exemplary embodiment, if a user-specifiable PN code record of the user of mobile device 330 is modified, name server 311 may receive the modified PN code record from mobile device 330 and update a PN code stored in name server 311 by correction and/or deletion.

In some exemplary embodiments, name server 311 may be configured to transmit a PN code record, with respect to a frequently queried PN code as a predetermined PN code, to mobile device 330 based at least in part on a record which may be used for cache management among PN code record types. Since the predetermined PN code is previously cached in mobile device 330 by cache management, it is possible to effectively reduce a load of the PN code name server.

In other exemplary embodiments, exemplary PN code server 310 may further include a database. The database may be configured to store PN code records therein. If name server 311 receives a query from mobile device 330, a PN code may be searched from name server 311 in order to check whether a corresponding PN code record is cached. If there is a corresponding PN code record, whether the cached record is expired may be checked. If not expired, the PN code record cached in name server 311 is returned to mobile device 330. If the cached record is expired or a corresponding PN code cached in name server 311 is not searched, a query is made again to the database and a search result may be returned to mobile device 330. Then, the returned PN code record may be updated and cached by name server 311. Among the PN code record types, the record types Updated, Expired, and Last accessed include a record update time, a record expire time, and a last record access time, respectively, and may be used for cache management if a cache is managed by the name server. Accordingly, records can be managed according to a frequency of use and a last use time, and, thus, it is possible to efficiently manage a limited storage space of name server 311.

In some exemplary embodiments, exemplary PN code server 310 may further include registration server 312 and notification server 313. Registration server 312 may be configured to register a user who is not registered at the PN code system. If a new PN code is registered, registration server 312 transmits information of the new PN code to name server 311 in order for name server 311 to update the new information.

If an event such an update or checkup of the PN code system occurs, notification server 313 may transmit the event to a corresponding mobile device. For example, the event may be a notification message transmitted from the PN code system or may be involved in an update of applications in mobile devices 330 and 340. Further, it may be involved in transmission of a predetermined PN code generated to reduce a load of name server 311.

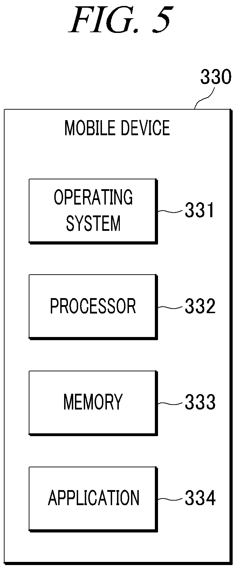

FIG. 5 is an exemplary block diagram illustrating an exemplary mobile device including an exemplary application. Exemplary mobile device 330 may include an operating system 331, a processor 332, a memory 333, and an application 334. Further, mobile device 330 may further include a display (not illustrated). A dial pad required to input a PN code into mobile device 330 may be implemented electronically on the display, or may be provided mechanically in mobile device 330. Otherwise, the dial pad may be externally connected to enable a user to perform an input operation. In the present disclosure, the dial pad has been described as an input device, but the present disclosure should not be understood as being limited thereto. It should be understood that a PN code can be input by using a device configured to implement an input device technology, such as a voice recognition technology, which is currently being used and can be used in the future. Memory 333 may include a wide variety of memory media including one or more of, but not limited to, volatile memory, non-volatile memory, flash memory, programmable variables or states, random access memory (RAM), read-only memory (ROM), or other static or dynamic storage media.

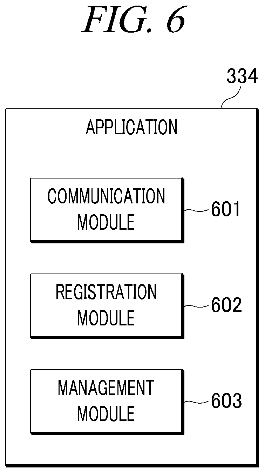

FIG. 6 illustrates modules of an application included in an exemplary mobile device. The modules of the application may include a communication module 601, a registration module 602, and a management module 603. Communication module 601 of application 334 in FIG. 6 may be configured to communicate with mobile device 340 wanted to be accessed or site server 350 which hosts a site illustrated in FIG. 3 through communication with name server 311 illustrated in FIG. 4.

In an exemplary embodiment, referring to FIG. 3 and FIG. 4, communication module 601 may receive a PN code from the user through the dial pad of mobile device 330. Firstly, whether a PN code corresponding to the input PN code is cached in memory 333 within mobile device 330 may be searched. If there is a corresponding PN code record, whether the cached record is expired may be checked. If the cached record is expired or a corresponding PN code is not searched from memory 333, a query is made again to name server 311 and a returned value as a search result may be received from name server 311. Referring to Table 1, among the PN code record types, the record types Updated, Expired, and Last accessed include a record update time, a record expire time, and a last record access time, respectively, and may be used by mobile device 330 for cache management. Accordingly, records can be managed according to a frequency of use and a last use time, and, thus, it is possible to efficiently manage a limited storage space of memory 333.

Referring to FIG. 1, there will be described an exemplary embodiment in which a PN code record type as a searched and returned result is a service number constituted with numbers. Communication module 601 may operate according to a protocol format included in a corresponding record type. In an exemplary embodiment with reference to FIG. 1, if a protocol format included in a record value is http, a web browser may be driven with a URL address of the given value. For example, if the user inputs a PN code 15880001#000 through the dial pad, a PN code record as a searched and returned result may include the following record.

### 000 http http://www.pncode.com

According to the above-described information, communication module 601 may drive a web browser with a specified URL address, http://www.pncode.com.

In a similar way, if a protocol format included in a record value is e-mail, communication module 601 may execute an e-mail application to send an e-mail to a given e-mail address, contact@pncode.com. Further, for example, if the exemplary user in FIG. 1 sells a product numbered 00365 through a site, another user who wants to purchase the product may input a PN code 15880001#003 through the dial pad, and a PN code record as a searched and returned result may include the following record.

### 003 http https://www.pncode.com:8080/product?id=00365

According to the above-described information, communication module 601 may directly access a specified URL address. As a result, the user who wants to purchase the product can achieve his/her purpose.

Further, if a protocol format included in a record value is app, when a given application ID or application file path is included in the record value, application 334 may execute an external application corresponding to the given value. In this case, if there is no application to be executed but application download URL information is included in the record value, the application may be downloaded and installed. If an application download URL value is included in the record value, application 334 may download and install an application from the corresponding URL. For example, if the user inputs a PN code 15880001#002, a PN code record as a searched and returned result may include the following record.

### 002 app id: pncode.app.package

### Source: http://www.pncode.com/download/pncode.app

According to the above-described information, communication module 601 may execute an application having an application ID pncode.app.package. In this case, if there is no application corresponding thereto, since application download URL information, http://www.pncode.com/download/pncode.app, exists, it is possible to download and install an application from this URL.

Then, there will be described an exemplary embodiment in which a PN code record type as a searched and returned result is p2p. Communication module 601 may directly make a query to an application of a target device through the network using IP address and port information which is mobile device user access information as a record value of p2p record type. In an exemplary embodiment referring to FIG. 2, for example, if the user inputs a PN code 01012345678#, a PN code record as a searched and returned result may include the following record.

### p2p 192.168.1.100:7272

Communication module 601 may attempt to establish a p2p connection with 192.168.1.100:7272 and make a query about a basically specified record, which is preset information, to the target device. If communication module 601 succeeds in making a query and receives a result from the target device, communication module 601 may request a content from the target device according to a protocol format as described above based at least in part on the received basically specified record. If communication module 601 fails to make a p2p query, communication module 601 may make a query about a set value of the PN code again to name server 311 and operate according to priority of returned results.

Further, in an exemplary embodiment, a value starting from 0 as a service number can be omitted when a PN code is input (for example, 15880001#001 can be input as 15880001#1). If the user does not input a service number, a first numerical record may be executed according to priority. The present disclosure is not limited to the above-described protocol formats, and other protocol formats may also be used. Since a program can be driven in various ways by a specified MIME type supported by the user's mobile device, such a protocol format may be, for example, p2p.

Referring to FIG. 2, an operation of a communication module of mobile device 340 when mobile device 330 attempts to establish a p2p connection to mobile device 340 will be described. In an exemplary embodiment, the user of mobile device 330 may input a PN code 01012345678# of mobile device 340. Then, communication module 601 of mobile device 330 may attempt to establish a p2p connection with 192.168.1.100:7272 which is a p2p record value of mobile device 340 and make a query about a basically specified record. The communication module of mobile device 340 may return the basically specified record to mobile device 330 which made the query about the PN code record. Further, if mobile device 340 receives a request for a content from mobile device 330 based at least in part on the basically specified record, the communication module of mobile device 340 may further perform an operation in response to the request for the content to mobile device 330, which made a query about the content,.

In some exemplary embodiments, application 334 may further include registration module 602 or management module 603. Registration module 602 may be configured to transmit registration information of a PN code of a user who is not registered at the PN code system to registration server 312 to register the non-registered user.

If management module 603 receives a notice such as an event update or checkup of the PN code system from notification server 313, management module 603 may perform an operation corresponding thereto. For example, the event may be a notification message transmitted from the PN code system or may be involved in an update of applications in mobile devices 330 and 340. In this case, management module 603 may operate according to the message or update the application. Further, the event may be involved in transmission of a predetermined PN code generated to reduce a load of name server 311. In this case, management module 603 of the application may receive and cache a predetermined PN code from name server 311. Further, if a user-specifiable PN code record is modified, management module 603 may transmit, to the name server 311, the modified PN code record to update a PN code stored in name server 311 by correction and/or deletion.

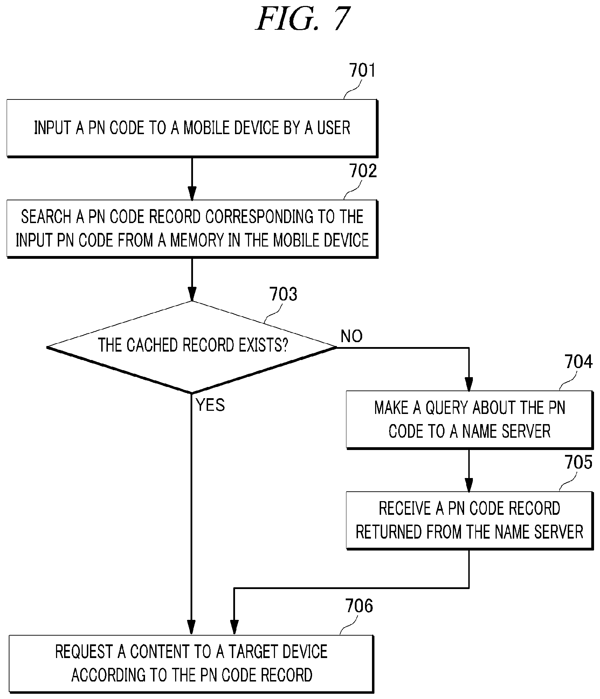

FIG. 7 is an exemplary flowchart illustrating a process of an exemplary communication module in an application of a mobile device. FIG. 7 illustrates that a process is performed in sequence from block 701 to block 706. It can be understood that blocks 701 to 706 may be appropriately rearranged to be suitable for a specific exemplary embodiment and all or some of blocks may be performed at the same time in some exemplary embodiments. It can also be understood that various blocks may be removed, divided up into additional blocks, and/or combined with other blocks in some exemplary embodiments.

The process may start from block 701 "Input a PN code to a Mobile Device by a User." Communication module 601 in mobile device 330 may receive a PN code from a user through a dial pad provided in mobile device 330 or externally connected to mobile device 330.

Block 701 may be followed by block 702 "Search a PN Code Record Corresponding to the Input PN Code from a Memory in the Mobile Device." Firstly, whether a PN code corresponding to the input PN code is cached may be searched from memory 333 in mobile device 330. Memory 333 in the mobile device may manage a cache using record types which may be used for cache management.

Block 702 may be followed by block 703 "the Cached Record Exists?" If there is a corresponding PN code record, whether the cached record is expired may be checked in some exemplary embodiments. If the cached record is expired or a corresponding PN code is not searched from memory 333, the process may proceed to block 704. If not expired, the process may proceed to block 706.

In block 704 "Make a Query about the PN Code to a Name Server," communication module 601 may make a query about the input PN code again to name server 311. In some exemplary embodiments, PN code server 310 may further include a database. In this case, whether there is a PN code record cached in name server 311 may be searched. If there is no search result or the cached record is expired, a query about the PN code may be made again to the database.

Block 704 may be followed by block 705 "Receive a PN Code Record Returned from the Name server." In some exemplary embodiments, if a PN code record does not exist in the returned value, the process may return to block 701 and wait until a user PN code is input again.

Block 705 or block 703 may be followed by block 706 "Request a Content to a Target Device According to the PN Code Record." According to a protocol format included in a record value corresponding to a record type as a search result received from block 703 and a returned result from block 706, communication module 601 may operate as described above while referring to a specified value in the record value.

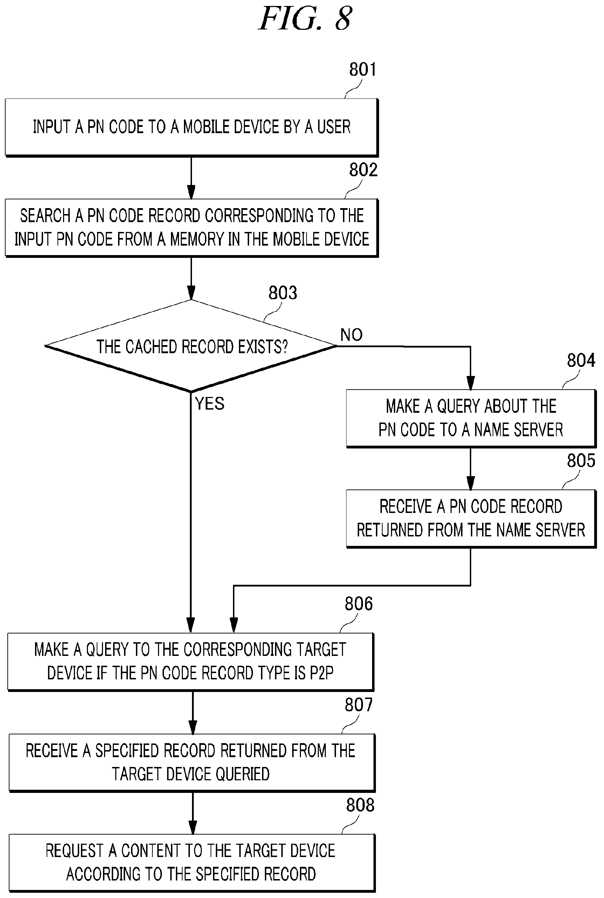

FIG. 8 is an exemplary flowchart illustrating another process of an exemplary communication module in an application of a mobile device. FIG. 8 illustrates that a process is performed in sequence from block 801 to block 808. It can be understood that blocks 801 to 808 may be appropriately rearranged to be suitable for a specific exemplary embodiment and all or some of blocks may be performed at the same time in some exemplary embodiments. It can also be understood that various blocks may be removed, divided up into additional blocks, and/or combined with other blocks in some exemplary embodiments.

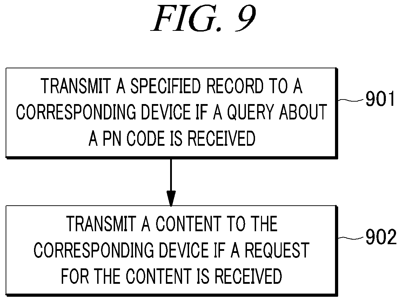

FIG. 9 may be further referred to as the process of FIG. 8 is described.

FIG. 9 is an exemplary flowchart illustrating a process of an exemplary communication module in an application of a target device. FIG. 9 illustrates that a process is performed in sequence from block 901 to block 902. It can be understood that blocks 901 to 902 may be appropriately rearranged to be suitable for a specific exemplary embodiment and all or some of blocks may be performed at the same time in some exemplary embodiments. It can also be understood that various blocks may be removed, divided up into additional blocks, and/or combined with other blocks in some exemplary embodiments.

The process may start from block 801 "Input a PN Code to a Mobile Device by a User." Communication module 601 in mobile device 330 may receive a PN code from a user through a dial pad provided in mobile device 330 or externally connected to mobile device 330.

Block 801 may be followed by block 802 "Search a PN Code Record Corresponding to the Input PN Code from a Memory in the Mobile device." Firstly, whether a PN code corresponding to the input PN code is cached may be searched from memory 333 in mobile device 330. Memory 333 in the mobile device may manage a cache using record types which may be used for cache management.

Block 802 may be followed by block 803 "the Cached record exists?" If there is a corresponding PN code record, whether the cached record is expired may be checked in some exemplary embodiments. If the cached record is expired or a corresponding PN code is not searched from memory 333, the process may proceed to block 804. If not expired, the process may proceed to block 806.

In block 804 "Make a Query about the PN Code to a Name Server," communication module 601 may make a query about the input PN code again to name server 311. In some exemplary embodiments, PN code server 310 may further include a database. In this case, whether there is a PN code record cached in name server 311 may be searched. If there is no search result or the cached record is expired, a query about the PN code may be made again to the database.

Block 804 may be followed by block 805 "Receive a PN Code Record Returned from the Name Server." In some exemplary embodiments, if a PN code record does not exist in the returned value, the process may return to block 801 and wait until the user PN code is input again.

Block 805 or block 803 may be followed by block 806 "Make a Query to the Corresponding Target Device If the PN Code Record Type is p2p." If a record type as a search result received from block 803 and a returned result from block 806 includes p2p, communication module 601 may directly make a query to an application of the target device through the network using IP address and port information which is mobile device user access information as a record value of p2p record type. For example, communication module 601 of mobile device 330 may make a query about a basically specified record, which is preset information, to mobile device 340 as the target device.

In this case, the communication module of target device 340 may start a process from block 901 "Transmit a Specified Record to a Corresponding Device If a Query about a PN Code Is Received" as shown in FIG. 9 in response to the query from mobile device 330.

Block 806 may be followed by block 807 "Receive a Specified Record Returned from the Target Device Queried". If a query is successfully made and a result is received from the target device, the process may proceed to the next block, but if a query fails to be made to the target device, a query about a set value of a corresponding PN code is made again to name server 311 and operations may be performed according to priority of returned results in some exemplary embodiments.

Block 807 may be followed by block 808 "Request a Content to the Target Device according to the Specified Record". For example, communication module 601 of mobile device 330 may continuously request a content from mobile device 340 as the target device according to a specified code received from the communication module of mobile device 340.

In this case, the communication module of target device 340 may proceed to block 902 "Transmit a Content to the Corresponding Device If a Request for the Content is Received" following after block 901 according to the process as shown in FIG. 9, and may perform an operation to the corresponding mobile device, which made a query about the corresponding content, in response to the request for the content.

With respect to the use of substantially any plural and/or singular terms herein, those skilled in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (for example, bodies of the appended claims) are generally intended as "open" terms (for example, the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

While certain example techniques have been described and shown herein using various methods, devices and systems, it should be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter also may include all implementations falling within the scope of the appended claims, and equivalents thereof.

## Claims

1. A method performed under control of a user device to access to another device through the user device, comprising:
receiving a code associated with the other device from a user of the user device;
transmitting the code to a code server;
receiving data for the code from the code server; and
accessing the other device based on the data for the code.

2. The method of Claim 1, wherein the code includes at least one number and at least one symbol.

3. The method of Claim 1 or Claim 2, wherein the receiving a code is performed through a dial pad of the user device.

4. The method of Claim 1, wherein the transmitting, the receiving, and the accessing are performed through the Internet.

5. The method of Claim 1, further comprising:
searching the code and data for the code from an internal memory of the user device.

6. The method of Claim 1, further comprising:
receiving data, from the other device, stored in the other device.

7. The method of Claim 1, wherein each of the user device and the other device includes a mobile device, and wherein the accessing is performed based on a P2P protocol.

8. The method of Claim 1, wherein the other device includes a server to provide one or more pages.

9. A user device for a code-based device access, comprising:
a processor;
an internal memory;
an application stored in the internal memory and that, when executed by the processor, performs the code-based device access; and
an operating system executed by the processor to operate and control the user device,
wherein, in response to at least one execution of the application or the operating system, the user device performs:
receiving a code associated with the other device from a user of the user device;
transmitting the code to a code server;
receiving data for the code from the code server; and
accessing the other device based on the data for the code.

10. The user device of Claim 9, wherein the code includes at least one number and at least one symbol.

11. The user device of Claim 9, wherein the accessing is performed based on a P2P protocol.
